# EUROPÄISCHE PATENTSCHRIFT

(11) **EP 0 674 453 B1**
(45) Veröffentlichungstag und Bekanntmachung des Hinweises auf die Patenterteilung: **01.09.1999**
(21) Anmeldenummer: 95103844.7
(22) Anmeldetag: 16.03.1995
(51) Int. Cl.: H04Q 7/30, H04Q 7/26

(54) **Verfahren und Schaltungsanordnung für den Zugriff schnurloser Endgeräte auf ein Telekommunikationssystem**
Method and apparatus for wireless terminal access to a telecommunication system
Méthode et dispositif pour l'accès de terminaux "sans-fil" à un système de télécommunications

(30) Priorität: 24.03.1994 DE 4410175
(43) Veröffentlichungstag der Anmeldung: 27.09.1995
(73) Patentinhaber: ALCATEL, 75008 Paris (FR)
(72) Erfinder: Adolphi, Hans-Joachim, D-70619 Stuttgart (DE); Veloso, Artur, D-73035 Göppingen (DE); Endler, Joachim, D-70435 Stuttgart (DE); Geywitz, Klaus, D-70839 Gerlingen (DE); Siegmund, Gerd, D-70435 Stuttgart (DE)
(74) Vertreter: Müller, Joachim, Dipl.-Ing.

(56) Entgegenhaltungen:
- EP-A- 0 595 392
- PHILIPS TELECOMMUNICATION REVIEW, Bd. 51, Nr. 2, August 1993 NÜRNBERG (DE), Seiten 35-40, XP 000426363 G. HAVERMANS ET AL 'Mobility in Private Networks'
- ELECTRICAL COMMUNICATION, 1993 Seiten 172-180, XP 000368136 WERBUS V ET AL 'DECT - CORDLESS FUNCTIONALITY IN NEW GENERATION ALCATEL PABXS'

## Beschreibung

Die Erfindung betrifft ein Verfahren und eine Schaltungsanordnung für den Zugriff schnurloser Endgeräte, beispielsweise schnurloser Telefone, auf ein Telekommunikationssystem, beispielsweise auf eine Nebenstellenanlage. Die wesentlichen Funktionen und Leistungsmerkmale eines Telekommunikationssystems mit schnurlosen Endgeräten, kurz schnurloses Telekommunikationssystem, sind von einem europäischen Standardisierungsgremium, dem European Telecommunications Standards Institute, kurz ETSI, in einem europäischen Standard für schnurlose Telekommunikation, englisch Digital European Cordless Telecommunications-Standard, kurz DECT-Standard, festgelegt worden. Dieser DECT-Standard ist Grundlage einer schnurlosen Nebenstellenanlage bei der über DECT-Schnittstellenschaltungen Basisstationen angeschlossen sind. Jede Basisstation versorgt eine Funkzelle und stellt in dieser die Funkverbindung zu den schnurlosen Telefonen her, vgl. Werbus, V., Veloso, A., Villanueva, A.: DECT: Mobilität in drahtlosen Nebenstellenanlagen der neuen Generation von Alcatel. Elektrisches Nachrichtenwesen, 2. Quartal 1993, Seite 172-180. Auch im Zusammenhang mit der Darstellung der Probleme bei der Mobilität von Fernsprechteilnehmern und der Mobilität von Fernsprechendgeräten ist bereits die Grundstruktur eines DECT-Zugriffsystems beschrieben worden, vgl. PHILIPS TELECOMMUNICATION REVIEW, Bd. 51, Nr. 2 August 1993 NÜRNBERG (DE), Seiten 35-40, XP 000426363, G. HAVERMANS ET AL "Mobility in Private Networks". Die Funkübertragung erfolgt in einem vom DECT-Standard festgelegten Frequenzband über zehn Trägerfrequenzen. Jeder dieser Träger ist in 24 Zeitschlitze unterteilt, wobei die ersten zwölf für die Übertragung von der Basisstation zum schnurlosen Telefon, die verbleibenden zwölf für die umgekehrte Übertragungsrichtung genutzt werden. Somit können gleichzeitig zwölf schnurlose Telefone von einer Basisstation bedient werden. Da vor der Funkübertragung die PCM-codierte Sprache in einen ADPCM-Code umcodiert wird, muß somit für jedes mögliche Gespräch in jeder Basisstation ein ADPCM/PCM-Transcoder vorhanden sein. In der oben genannten drahtlosen Nebenstellenanlage werden jeweils zwei Basisstationen von einer speziellen DECT-Schnittstellenschaltungsanordnung verwaltet. Die beiden Funkzellen bilden ein Zellenbündel. Um den Aufwand für 24 ADPCM/PCM-Transcoder je Zellenbündel zu reduzieren, werden den praktischen Erfordernissen entsprechend 16 gleichzeitige Kommunikationsverbindungen je Zellenbündel zugelassen, die je nach Bedarf auf die beiden Basisstationen verteilt werden. Dennoch ist der Aufwand für die sechzehn ADPCM/PCM-Transcoder sehr groß, und es besteht der Wunsch, die Anzahl der ADPCM/PCM-Transcoder ohne Einschränkung der Zugriffsmöglichkeiten zu reduzieren, um eine Verringerung der Kosten zu erreichen. Um stets die qualitativ beste Funkverbindung bereitstellen zu können und um während eines Gesprächs eine Ortsveränderung mit dem schnurlosen Telefon vornehmen zu können, wird gemäß DECT-Standard ein unterbrechungsloser Kanalwechsel innerhalb einer Funkzelle oder eines Zellenbündels gewährleistet. Zwar ist auch der Wechsel von einem Zellenbündel zu einem anderen möglich, jedoch ist das nur mit dem automatischen Wiederaufbau einer neuen Verbindung möglich. Damit verbunden ist ein geringer Datenverlust, der bei der Sprachübertragung nicht störend ist, bei der Datenübertragung aber zu Fehlern führen kann. Deshalb ist es wünschenswert, auch den Wechsel eines Zellenbündels, das sogenannte Board-handover, unterbrechungsfrei durchführen zu können.

Die Erfindung soll nun die Aufgabe lösen, den Zugriff schnurloser Endgeräte auf eine Telekommunikationsanlage so zu organisieren, daß einerseits der Hardwareaufwand verringert wird und andererseits die Leistungsmerkmale verbessert werden.

Diese Aufgabe wird durch das im ersten Patentanspruch angegebene Verfahren und durch die im zweiten Patentanspruch angegebene Schaltungsanordnung gelöst.

Das Wesen der Erfindung besteht darin, daß die Hauptzentraleinheit von der Verwaltung der Mobilität der Teilnehmer wesentlich entlastet wird und die Vermittlungsvorgänge von der PCM-Seite des codierten Signals auf die ADPCM-Seite verlagert und von einer speziellen Baugruppe, der sogenannten mobilen Zentraleinheit, MOB CPU, übernommen werden. Diese mobile Zentraleinheit wirkt gegenüber dem Telekommunikationssystem wie eine Schnittstellenschaltung für drahtgebundene Teilnehmer und kann dementsprechend von der Hauptzentraleinheit verwaltet werden. Mit der Erfindung wird durch zentrale Steuerung einer Vielzahl von DECT-Schnittstellenschaltungsanordnungen eine Verringerung der Anzahl von PCM/ADPCM-Transcodern erreicht und außerdem ein unterbrechungsfreier Wechsel eines Zellenbündels ermöglicht.

Die Erfindung wird nachstehend an einem Ausführungsbeispiel erläutert. In der dazugehörigen Zeichnung zeigen
- Fig. 1: eine Konfiguration eines schnurlosen Telekommunikationssystems nach dem Stand der Technik,
- Fig. 2: ein Blockschaltbild zweier DECT-Schnittstellenschaltungen nach dem Stand der Technik,
- Fig. 3: ein Blockschaltbild zweier DECT-Schnittstellenschaltungen mit PCM-Systembus nach dem Stand der Technik,
- Fig. 4: ein Blockschaltbild der erfindungsgemäßen Schaltungsanordnung und
- Fig. 5: eine Prinzipschaltung einer Telekommunikationsanlage mit der erfindungsgemäßen Schaltungsanordnung.

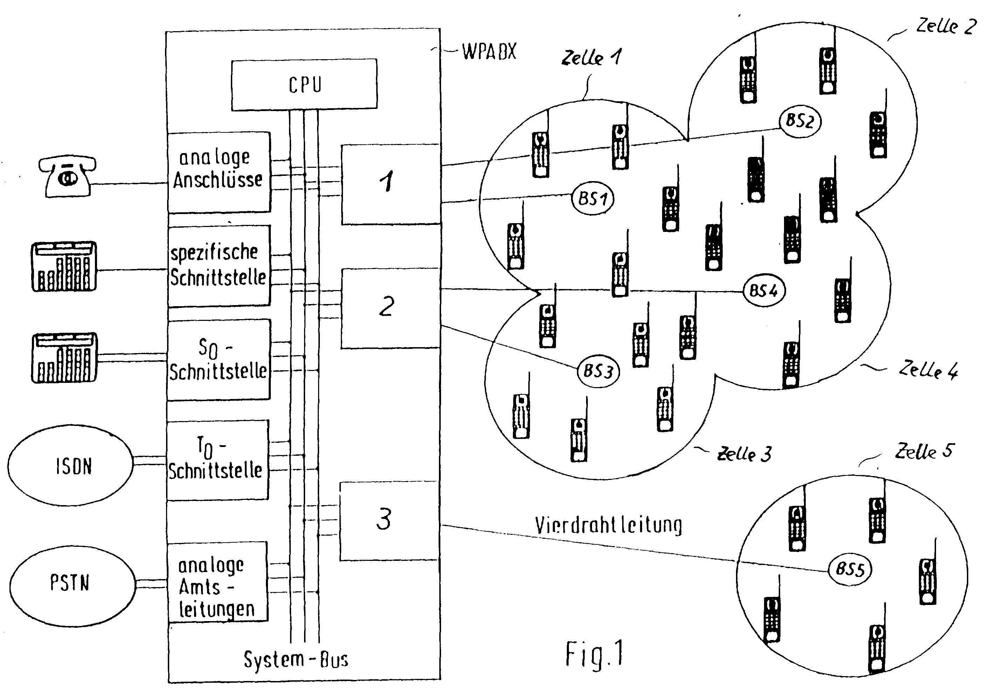

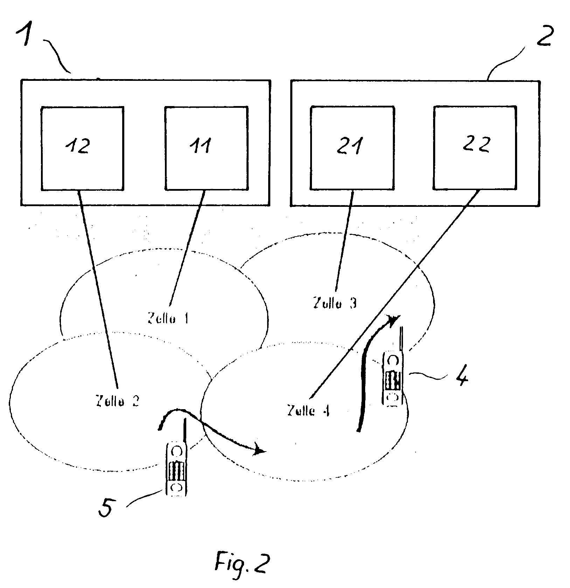

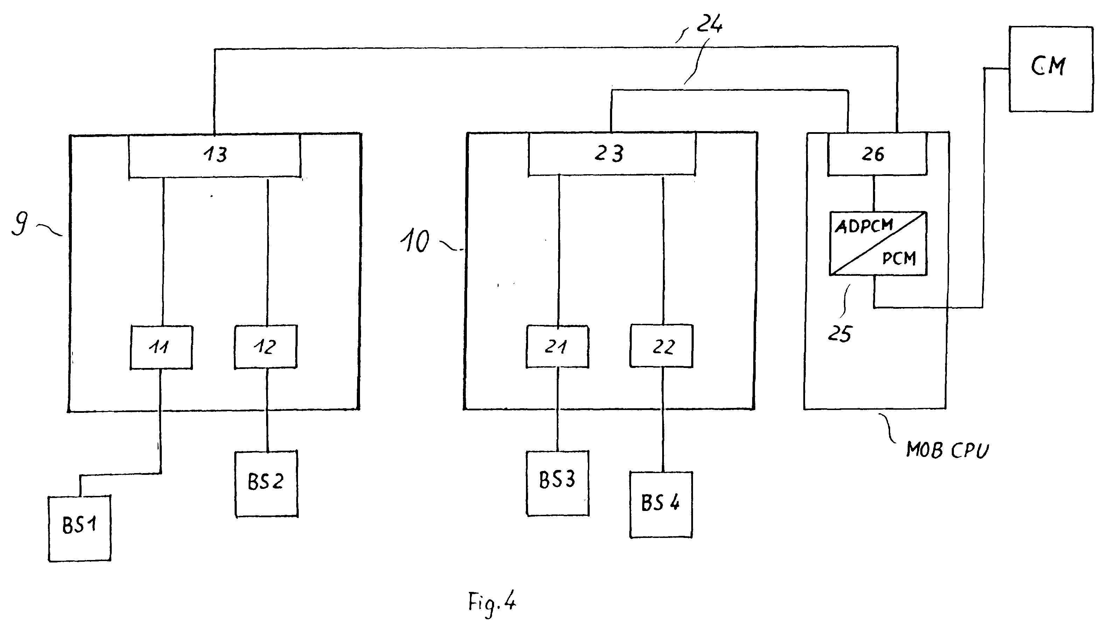

Gemäß Fig. 1 besteht ein schnurloses Telekommunikationssystem, hier eine schnurlose Nebenstellenanlage WPABX, Wireless Privat Area Branch Exchange, im wesentlichen aus einer Hauptzentraleinheit CPU, die über einen Systembus unterschiedliche Schnittstellen verwaltet. Eine solche Anlage ist als eigenständige Anlage zum Anschluß drahtgebundener und/oder schnurloser Endgeräte einsetzbar. Es ist aber auch möglich, die Anlage an bestehende Netze anzuschließen. Über eine Schnittstellenschaltung für analoge Amtsleitungen ist der Anschluß an ein öffentliches Fernsprechnetz PSTN, Public Switched Telephone Network, möglich, über eine T₀-Schnittstellenschaltung kann der Anschluß an ein diensteintegrierendes digitales Netz, ISDN, vorgenommen werden. An DECT-Schnittstellenschaltungen 1, 2, 3 sind Basisstationen BS1 ... BS5 jeweils über Vierdrahtleitungen angeschlossen. Jede Basisstation BS1 ... BS5 versorgt jeweils eine sie umgebende Funkzelle Zelle 1 ... Zelle 5 und stellt in dieser die Funkverbindung zu den schnurlosen Endgeräten her. Die Anzahl der DECT-Schnittstellenschaltungen und die Anzahl der Basisstationen in Fig. 1 ist nur beispielhaft, ihre tatsächliche Anzahl hängt von der Größe der zu versorgenden Umgebung und von der Anzahl der Teilnehmer ab. Gemäß Fig. 2 enthält jede DECT-Schnittstellenschaltung 1, 2 mindestens einen anwenderspezifischen Schaltkreis, in Fig. 2 jeweils zwei anwenderspezifische Schaltkreise 11, 12 und 21, 22, an die jeweils eine Basisstation angeschlossen ist. Die von einer DECT-Schnittstellenschaltung 1, 2 versorgten Funkzellen Zelle 1, Zelle 2 und Zelle 3, Zelle 4 bilden jeweils ein Funkbündel. In Fig. 2 sind zwei Vorgänge dargestellt, die auf Grund der Mobilität der schnurlosen Endgeräte 4, 5 auftreten können. Außer dem unterbrechungsfreien Kanalwechsel innerhalb einer Funkzelle ist auch ein unterbrechungsfreier Kanalwechsel innerhalb eines Zellenbündels möglich, wenn sich beispielsweise ein erstes schnurloses Endgerät 4 von der Funkzelle Zelle 4 in die Funkzelle Zelle 3 bewegt. Ein zweites schnurloses Endgerät 5 wechselt durch Ortsveränderung beispielsweise von einem ersten Zellenbündel aus Zelle 1 und Zelle 2 in ein zweites Zellenbündel aus Zelle 3 und Zelle 4. Nach dem bekannten Stand der Technik ist bei einem solchen Zellenbündelwechsel ein Neuaufbau der Verbindung erforderlich, allerdings erfolgt der Kanalwechsel dann nicht unterbrechungsfrei. Die erfindungsgemäße Lösung ermöglicht nunmehr den unterbrechungsfreien Zellenbündelwechsel, wodurch sich vorteilhafterweise kein Datenverlust ergibt. Eine Begründung folgt bei der Erläuterung von Fig. 4.

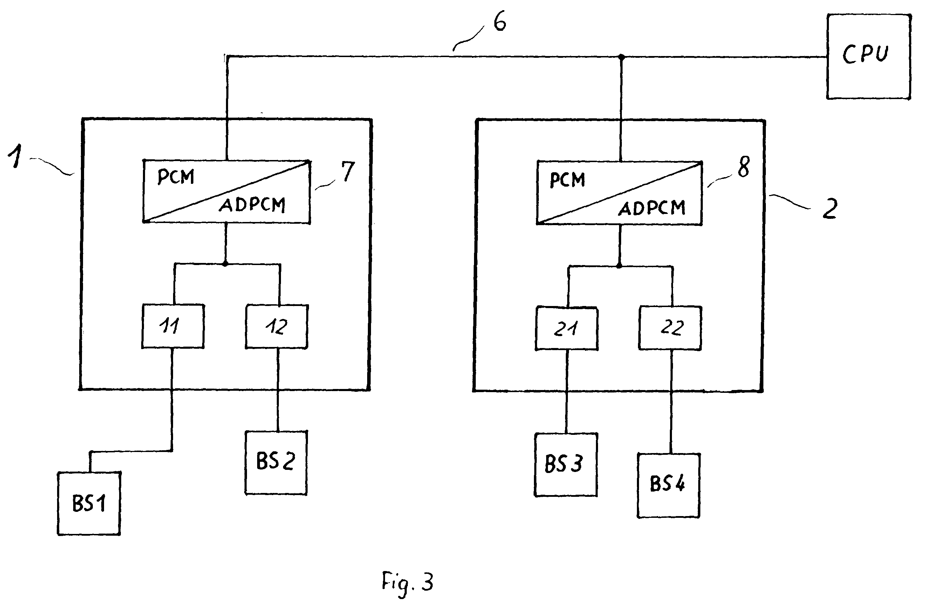

In Fig. 3 ist dargestellt, daß in bekannter Weise in jeder DECT-Schnittstellenschaltung 1, 2 eine bestimmte Anzahl ADPCM/PCM-Transcoder vorhanden ist, hier repräsentativ dargestellt als ein erster ADPCM/PCM-Transcoder 7 in der ersten DECT-Schnittstellenschaltung 1 und als ein zweiter ADPCM/PCM-Transcoder 8 in der zweiten DECT-Schnittstellenschaltung 2. Da jede Basisstation BS1 ... BS4 gemäß der zwölf Zeitschlitze je Trägerfrequenz gleichzeitig zwölf schnurlose Endgeräte bedienen kann, sind je DECT-Schnittstellenschaltung 1, 2 maximal vierundzwanzig ADPCM/PCM-Transcoder erforderlich. Je nach erwartetem Verkehr wird diese Anzahl in praktischen Fällen reduziert, beispielsweise auf sechzehn ADPCM/PCM-Transcoder, wobei durch eine spezielle Steuerung der anwenderspezifischen Schaltkreise 11, 12 die sechzehn ADPCM/PCM-Transcoder je nach Bedarf funktionell auf die beiden Basisstationen verteilt werden können. Die Verwaltung der DECT-Schnittstellenschaltungen 1, 2 mit den angeschlossenen Basisstationen BS1 ... BS4 und der von diesen bedienten schnurlosen Endgeräte erfolgt mit PCM-codierten Signalen über den Systembus 6 von der Hauptzentraleinheit CPU. Dabei nimmt die Verwaltung der Mobilität der schnurlosen Endgeräte einen großen Teil der Rechnerlast in Anspruch. Fig. 4 zeigt die erfindungsgemäße Schaltungsanordnung, die aus zwei gegenüber dem bekannten Stand der Technik abgeänderten DECT-Schnittstellenschaltungen 9, 10, aus einer neuen Zentraleinheit MOB CPU und aus einem Haupt-Control-Modul CM besteht. Die Verwaltung der Mobilität erfolgt nunmehr durch die neue Zentraleinheit MOB CPU, und die Hauptzentraleinheit wird wesentlich entlastet. Diese neue Schaltungsstruktur hat folgende weitere Vorteile. Die neuen DECT-Schnittstellenschaltungen 9, 10 enthalten keine ADPCM/PCM-Transcoder. Die Daten werden ADPCM-codiert zu der neuen Zentraleinheit MOB CPU übertragen, wobei jeder anwendungsspezifische Schaltkreis 11, 12 und 21, 22 jeweils über eine einfache Vermittlungsbaugruppe 13 und 23 Zugriff zu einer ADPCM Vielfachleitung 24 hat. Die Umcodierung des Codierungsformats von ADPCM in PCM findet in der neuen Zentraleinheit MOB CPU, die nunmehr die ADPCM/PCM-Transcoder enthält, statt. Die neue Zentraleinheit MOB CPU enthält weiterhin eine Vermittlungseinheit 26 über die die ADPCM-Vielfachleitungen 24 Zugriff zu den ADPCM/PCM-Transcodern hat. Somit übernimmt die neue Zentraleinheit MOB CPU zentral für alle DECT-Schnittstellenschaltungen 9, 10 eine vermittlungstechnische Funktion, so daß die Anzahl der ADPCM/PCM-Transcoder nunmehr von der Anzahl der schnurlosen Endgeräte und deren Verkehrswerte bestimmt wird und gegenüber der gesamten Anzahl der zuvor in den DECT-Schnittstellenschaltungen 1, 2 enthaltenen ADPCM/PCM-Transcodern vorteilhafterweise drastisch reduziert werden kann.

Als neues Leistungsmerkmal ermöglicht die erfindungsgemäße Schaltungsstruktur den unterbrechungsfreien Zellenbündelwechsel. Beim Übergang von einem ersten Zellenbündel, versorgt von der neuen ersten DECT-Schnittstellenschaltung 9, zu einem zweiten Zellenbündel, versorgt von der neuen zweiten DECT-Schnittstellenschaltung 10 werden die gleichen Nachrichten jeweils über die Vermittlungsbaugruppe 13 und 23 in unterschiedlichen Zeitschlitzen zur Vermittlungseinheit 26 übertragen. Die Nachrichten liegen somit auf zwei Kanälen rahmensynchron vor, so daß dann die neue Zentraleinheit MOB CPU auf die Vermittlungseinheit 26 zugreifen kann und die Umschaltung von einem Kanal des ersten Zellenbündels auf einen Kanal des zweiten Zellenbündels unterbrechungsfrei durchführen kann, das sogenannte Board-Handover ist damit unterbrechungsfrei möglich.

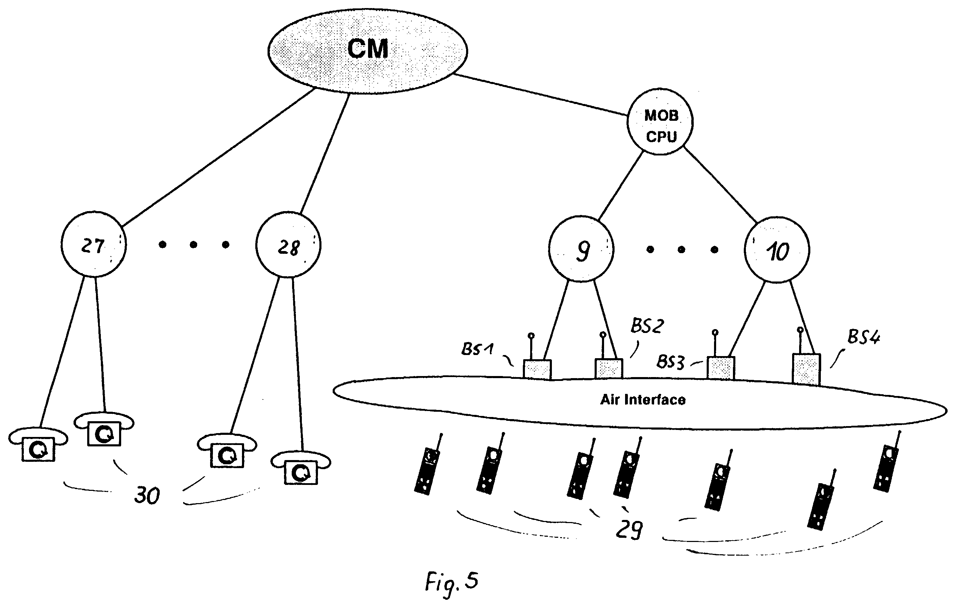

Fig. 5 zeigt ein Prizipschaltbild des physikalischen Aufbaus einer Telekommunikationsanlage mit schnurlosen Endgeräten 29 und drahtgebundenen Endgeräten 30. Aus der Sicht der Telekommunikationsanlage, hier aus der Sicht des Haupt-Control-Moduls CM erscheinen nur drahtgebundene Benutzer, da die Schnittstellenschaltungen 27, 28 für drahtgebundene Endgeräte und die neue Zentraleinheit MOB CPU für den Haupt-Control-Modul CM die gleichen logischen Funktionen auszuführen haben. Alle mit der Mobilität der schnurlosen Endgeräte 29 zusammenhängenden Funktionen werden von der neuen Zentraleinheit MOB CPU ausgeführt und scheinen nicht zu dem Haupt-Control-Modul CM durch.

## Patentansprüche

1. Verfahren für den Zugriff einer Vielzahl schnurloser Endgeräte (29) auf ein Telekommunikationssystem (WPABX) mit einem Haupt-Control-Modul (CM) für die Verwaltung einer Vielzahl Schnittstellenschaltungen (9, 10) mit diesen zugeordneten Basisstationen (BS1 ... BS4) für schnurlose Endgeräte (29) und/oder einer Vielzahl Schnittstellenschaltungen (27, 28) für drahtgebundene Endgeräte (30) sowie für die Steuerung von Verbindungen mit weiteren Netzen, wie öffentlichen analogen Fernsprechnetzen und/oder diensteintegrierenden digitalen Netzen,
**dadurch gekennzeichnet, daß**
die über eine Funkstrecke zwischen dem schnurlosen Endgerät (29) und der Basisstation (BS1 ... BS4) im ADPCM-Format übertragenen Nachrichten von der der jeweiligen Basisstation (BS1 ... BS4) zugeordneten Schnittstellenschaltungen (9, 10) für schnurlose Endgeräte (29) zu einer von dem Haupt-Control-Modul (CM) abgesetzten Zentraleinheit (MOB CPU) rahmensynchron über unterschiedliche Kanäle übertragen werden und die Übertragung von den Schnittstellenschaltungen (9, 10) für schnurlose Endgeräte (29) mit Hilfe den Schnittstellenschaltungen (9, 10) zugeordneten Vermittlungsbaugruppen (13, 23) zu einer in der abgesetzten Zentraleinheit (MOB CPU) vorhandenen Vermittlungseinheit (26) erfolgt und daß in der abgesetzten Zentraleinheit (MOB CPU) eine Umcodierung des Codierungsformats von ADPCM in PCM durchgeführt wird, so daß mit Hilfe der abgesetzten Zentraleinheit (MOB CPU) bei einem Übergang eines schnurlosen Endgerätes (29) von einem ersten Zellenbündel zu einem zweiten Zellenbündel ein unterbrechungsloser Kanalwechsel vorgenommen wird.

2. Schaltungsanordnung für den Zugriff einer Vielzahl schnurloser Endgeräte (29) auf ein Telekommunikationssystem (WPABX) mit einem Haupt-Control-Modul (CM) für die Verwaltung einer Vielzahl Schnittstellenschaltungen (9, 10) mit diesen zugeordneten Basisstationen (BS1 ... BS4) für schnurlose Endgeräte (29) und /oder einer Vielzahl Schnittstellenschaltungen (27, 28) für drahtgebundene Endgeräte (30) sowie für die Steuerung von Verbindungen mit weiteren Netzen, wie öffentlichen analogen Fernsprechnetzen und/oder diensteintegrierenden digitalen Netzen, wobei ein schnurloses Endgerät (29) über eine Funkstrecke mit einer Basisstation (BS1 ... BS4) verbunden ist und die Basisstation (BS1 ... BS4) an einen anwenderspezifischen Schaltkreis (11, 12; 21, 22), der Teil einer Schnittstellenschaltung (9, 10) ist, geschaltet ist,
dadurch gekennzeichnet, daß
die in der Schnittstellenschaltung (9, 10) enthaltenen anwenderspezifischen Schaltkreise (11, 12; 21, 22) mit einer Vermittlungsbaugruppe (13; 23) verbunden sind, deren Ausgang über einen Bus (24) an eine Vermittlungseinheit (26), die sich in der abgesetzten Zentraleinheit (MOB CPU) befindet, geschaltet ist und daß der Ausgang der Vermittlungseinheit (26) über einen ADPCM/PCM-Transcoder (25) mit dem Haupt-Control-Modul (CM) verbunden ist.

## Claims

1. Process for controlling the access by a number of cordless terminals (29) to a telecommunications system (WPABX) with a main control module (CM) for managing a number of interface circuits (9, 10) with base stations (BS1 ... BS4) for cordless terminals (29) assigned to said interface circuits and/or a number of interface circuits (27, 28) for wired terminals (30), as well as for controlling connections to further networks, such as public analogue telephone networks and/or integrated services digital networks,
**characterised in that** the messages transmitted in the ADPCM format via a radio link between the cordless terminal (29) and the base station (BS1 ... BS4) are transmitted from the interface circuit (9, 10) for cordless terminals (29) assigned to the respective base station (BS1 ... BS4), to a central processing Unit (MOB CPU) remote from the main control module (CM), in frame synchronism via different channels, and the transmission from the interface circuits (9, 10) for cordless terminals (29) to a switching unit (26) located in the remote central processing unit (MOB CPU) is effected with the aid of switching modules (13, 23) assigned to the interface circuits (9, 10), and that recoding of the coding format from ADPCM to PCM takes place in the remote central control unit (MOB CPU), so that during a transfer of a cordless terminal (29) from a first cell group to a second cell group an uninterrupted channel change is performed with the aid of the remote central processing unit (MOB CPU).

2. Circuit arrangement for controlling the access by a number of cordless terminals (29) to a telecommunications system (WPABX) with a main control module (CM) for managing a number of interface circuits (9, 10) with base stations (BS1 ... BS4) for cordless terminals (29) assigned to said interface circuits and/or a number of interface circuits (27, 28) for wired terminals (30), as well as for controlling connections to further networks, such as public analogue telephone networks and/or integrated services digital networks, wherein a cordless terminal (29) is connected via a radio link to a base station (BS1 ... BS4) and the base station (BS1 ... BS4) is connected to an application-specific circuit (11, 12; 21, 22) that is part of an interface circuit (9, 10), **characterised in that** the application-specific circuits (11, 12, 21, 22) contained in the interface circuit (9, 10) are connected to a switching module (13; 23) whose output is connected via a bus (24) to a switching unit (26) that is located in the remote central processing control unit (MOB CPU), and that the output of the switching unit (26) is connected via an ADPCM/PCM transcoder (25) to the main control module (CM).

## Revendications

1. Procédé pour l'accès de divers terminaux sans fil (29) à un système de télécommunication (WPABX) avec un module de commande principal (CM) pour la gestion d'une pluralité de circuits d'interface (9, 10) avec des stations de base (BS1 ... BS4) affectées à ceux-ci pour des terminaux sans fil (29) et/ou divers circuits d'interface (27, 28) pour des terminaux sur fil (30) ainsi que pour la commande de connexions avec d'autres réseaux, tels que des réseaux téléphoniques analogiques publics et/ou des réseaux numériques à intégration de services, caractérisé en ce que les messages transmis par l'intermédiaire d'une ligne radioélectrique entre le terminal sans fil (29) et la station de base (BS1 ... BS4) au format ADPCM sont transmis par le circuit d'interface (9, 10), affecté à la station de base respective (BS1 ... BS4), à une unité mobile (MOB CPU) par rapport au module de commande principal (CM) en synchronisation de trame sur différents canaux, et la transmission depuis les circuits d'interface (9, 10) pour des terminaux sans fil (29) a lieu à l'aide de sous-ensembles d'échange (13, 23) affectés aux circuits d'interface (9, 10) vers une unité d'échange (26) existant dans l'unité centrale mobile (MOB CPU), et en ce que dans l'unité centrale mobile (MOB CPU), un transcodage du format de codage d'ADPCM en PCM est effectué, de sorte qu'à l'aide de l'unité centrale mobile (MOB CPU), lorsqu'un terminal sans fil (29) passe d'un premier faisceau cellulaire à un deuxième faisceau cellulaire, un changement de canal sans interruption est effectué.

2. Mode de couplage pour l'accès d'une pluralité de terminaux sans fil (29) à un système de télécommunication (WPABX) avec un module de commande principal (CM) pour la gestion d'une pluralité de circuits d'interface (9, 10) avec des stations de base (BS1 ... BS4) affectées à ceux-ci pour des terminaux sans fil (29) et/ou une pluralité de circuits d'interface (27, 28) pour des terminaux sur fil (30) ainsi que pour la commande de connexions avec d'autres réseaux, tels que des réseaux téléphoniques analogiques publics et/ou des réseaux numériques à intégration de services, dans lequel un terminal sans fil (29) est relié à travers une ligne radioélectrique à une station de base (BS1 ... BS4) et la station de base (BS1 ... BS4) est connectée à un circuit de commande spécifique à l'utilisateur (11, 12; 21, 22) faisant partie d'un circuit d'interface (9, 10), caractérisé en ce que les circuits de commande spécifiques aux utilisateurs (11, 12 ; 21, 22) contenus dans le circuit d'interface (9, 10) sont reliés à un sous-ensemble d'échange (13 ; 23) dont la sortie est connectée par l'intermédiaire d'un bus (24) à une unité d'échange (26) qui se trouve dans l'unité centrale mobile (MOB CPU), et en ce que la sortie de l'unité d'échange (26) est reliée par l'intermédiaire d'un transcodeur ADPCM/PCM (25) au module de commande principal (CM).
